# EUROPEAN PATENT APPLICATION

(11) **EP 3 588 953 A1**
(43) Date of publication of application: **01.01.2020**
(21) Application number: 18305815.5
(22) Date of filing: 26.06.2018
(51) Int. Cl.: H04N 19/136, G06T 5/00, H04N 19/98, H04N 5/445

(54) **METHOD FOR PRODUCING AN OUTPUT IMAGE COMPRISING DISPLAYABLE NON-LINEAR OUTPUT DATA AND AT LEAST ONE SEMANTIC ELEMENT**

(71) Applicant: InterDigital CE Patent Holdings, 75017 Paris (FR)
(72) Inventor: REINHARD, Erik, 35576 Cesson-Sévigné (FR); KERDRANVAT, Michel, 35576 Cesson-Sévigné (FR); STAUDER, Jürgen, 35576 Cesson-Sévigné (FR)
(74) Representative: Huchet, Anne

(57) **Abstract**

It is proposed a production method for producing an output image (94o, 104o) comprising displayable non-linear output data. The method comprises: obtaining an input image (91i) comprising linear or non-linear input data; obtaining at least one semantic element (91o') comprised in the input image or external to, and to be associated with, the input image; if the at least one semantic element is comprised in the input image, obtaining a partial image (91o) by removing, from the input image, at least one image region corresponding to the at least one semantic element; applying a first mapping operator (92) to the input image, if the at least one semantic element is external to the input image, or to the partial image, if the at least one semantic element is comprised in the input image; applying a second mapping operator (93) to the at least one semantic element, the second mapping operator being different from the first mapping operator; and combining (94) the results of applying a first mapping operator and applying a second mapping operator (92o, 93o), to produce the output image.

## Description

### 1. TECHNICAL FIELD

The present disclosure relates to image processing.

More specifically, the disclosure relates to methods and devices involving a mapping operator for producing an output image comprising displayable non-linear output data (i.e. data which can be directly displayed by a display device).

The disclosure can be applied with many different mapping operators, notably but not exclusively:
- tone mapping operators, including HDR to HDR tone mapping operators and HDR to SDR tone mapping operators (where HDR and SDR stand for "High Dynamic Range" and "Standard Dynamic Range" respectively);
- inverse tone mapping operators, including HDR to HDR inverse tone mapping operators and SDR to HDR inverse tone mapping operators;
- gamut mapping operators;
- inverse gamut mapping operators; and
- Hybrid Log-Gamma Optico-Optical Transfer Functions (HLG OOTF).

### 2. TECHNOLOGICAL BACKGROUND

It is sought more particularly here below in this document to describe problems existing when a tone mapping operator or an inverse tone mapping operator is used for producing an output image comprising displayable non-linear output data. The disclosure of course is not limited to these particular applications but is of interest when any other mapping (e.g. gamut mapping operators, inverse gamut mapping operators, HLG OOTF, etc.) is used for producing such an output image and has to cope with closely related or similar issues and problems.

Reference levels at which content should be reproduced in a HDR image (or a HDR video comprising HDR images) are currently discussed, for instance in standardization bodies. Such reference levels are unlikely to be consistent with tone mapping and inverse tone mapping practices. This may be especially the case with text elements, as well as logos and other graphical elements.

For example, in SDR television, text elements displayed on top of video are often represented at high luma levels, for instance at 235 (in an 8-bit signal) or above. In HDR television, the peak luminance of display devices is high enough that placing text elements at correspondingly high levels would produce an uncomfortable viewing condition.

This has two implications:
- If HDR material is tone mapped to SDR levels (i.e. if a tone mapping operator is used for producing an output image comprising displayable non-linear output data and text elements), then the text elements will be placed at levels that are too low;
- If SDR material is inverse tone mapped to HDR levels (i.e. if an inverse tone mapping operator is used for producing an output image comprising displayable non-linear output data and text elements), then the text elements will be placed at levels that are too high.

### 3. SUMMARY

A particular aspect of the present disclosure relates to a production method according to **claim 1.**

The general principle of the proposed solution is to map separately (and with different mapping operators) the semantic element(s) and the input image (if the semantic element is external to the input image) or the partial image (corresponding to the rest of the input image when the semantic element has been removed from the input image).

The benefit of this approach is that semantic elements (e.g. text and logos) may be mapped according to sensible reference levels (not directly compatible with existing mapping practices; e.g. tone mapping and inverse tone mapping practices), without causing undue fatigue.

Another aspect of the present disclosure relates to a production device according to **claim 2.**

Another aspect of the present disclosure relates to a computer program product according to **claim 15.**

Another aspect of the present disclosure relates to a non-transitory computer-readable carrier medium, storing a program which, when executed by a computer or a processor causes the computer or the processor to carry out the proposed method (in any of its different embodiments).

### 4. LIST OF FIGURES

Other features and advantages of embodiments shall appear from the following description, given by way of indicative and non-exhaustive examples and from the appended drawings, of which:
- Figure 1 illustrates a first example of SDR workflow according to the prior art, requiring no mapping;
- Figure 2 illustrates a first example of HDR workflow according to the prior art, requiring a HDR to HDR tone mapping;
- Figure 3 illustrates a second example of HDR workflow according to the prior art, requiring a HDR to HDR inverse tone mapping;
- Figure 4 illustrates a third example of HDR workflow according to the prior art, requiring a HDR to SDR tone mapping;
- Figure 5 illustrates a fourth example of HDR workflow according to the prior art, requiring a HDR to HDR inverse tone mapping;
- Figure 6 illustrates a fifth example of HDR workflow according to the prior art, requiring a HLG OOTF mapping;
- Figure 7 illustrates a second example of SDR workflow according to the prior art, requiring a SDR to HDR inverse tone mapping;
- Figure 8 illustrates a third example of SDR workflow according to the prior art, requiring a SDR to HDR inverse tone mapping;
- Figure 9 illustrates a first embodiment of the invention;
- Figure 10 illustrates a second embodiment of the invention;
- Figure 11 is a flowchart of a method according to the aforesaid first embodiment of the invention;
- Figure 12 is a flowchart detailing an embodiment of step 116 shown in figure 112;
- Figure 13 is a flowchart of a method according to the aforesaid second embodiment of the invention; and
- Figure 14 shows the simplified structure of a production device according to an embodiment of the invention.

### 5. DETAILED DESCRIPTION

In all of the figures of the present document, similar elements and steps are designated by the same numerical reference sign.

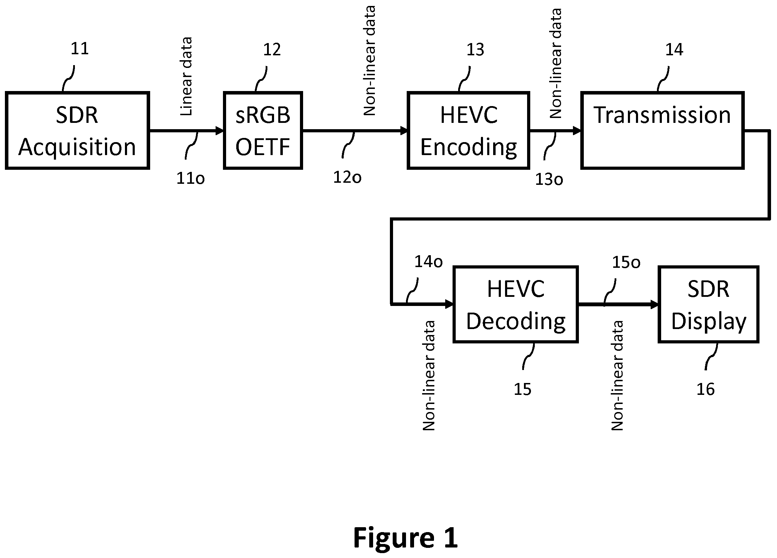

### 5.1 Examples of SDR or HDR workflow according to the prior art (figures 1 to 8)

**Figure 1** illustrates a first example of SDR workflow according to the prior art, requiring no mapping. The successive operations (or blocks) of this workflow are numbered 11 to 16. The operation 11 is a SDR (Standard Dynamic Range) acquisition, which delivers linear data 11o. The operation 12 is a sRGB (standard Red Green Blue) OETF (Opto-Electronic Transfer Function), which receives the linear data 11o and delivers non-linear data 12o. The operation 13 is a HEVC (High Efficiency Video Coding) encoding, which receives the non-linear data 12o and delivers encoded non-linear data 13o. The operation 14 is a transmission, which receives the encoded non-linear data 13o and delivers encoded non-linear data 14o. The operation 15 is a HEVC decoding, which receives the encoded non-linear data 14o and delivers decoded non-linear data 15o. The operation 16 is a SDR display, which receives the decoded non-linear data 15o in order to display them on a SDR display device. In this workflow, operations 15 and 16 are carried out on the consumer side. The decoded non-linear data 15o are displayable data, i.e. data which can be directly displayed by a SDR display device (without requiring a previous mapping operation).

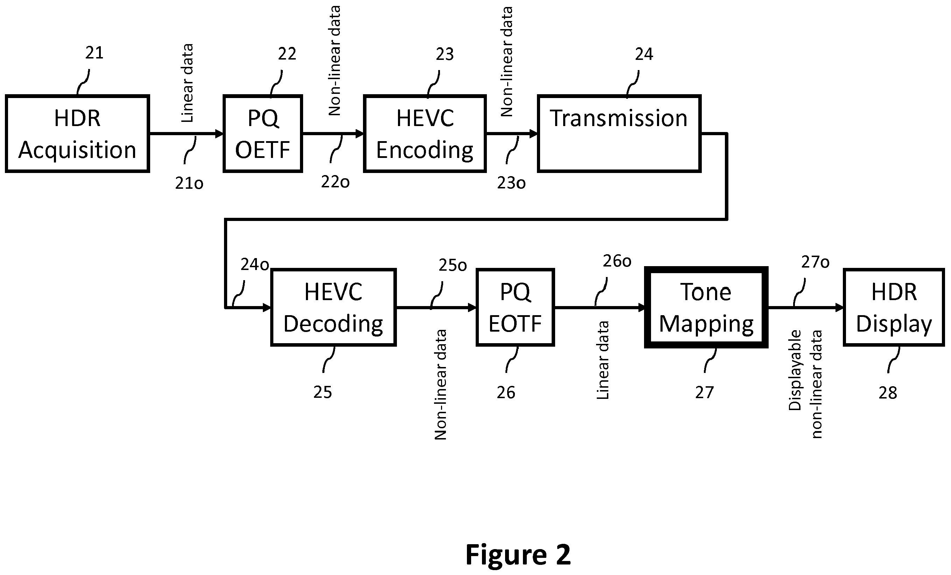

**Figure 2** illustrates a first example of HDR workflow according to the prior art, requiring a HDR to HDR tone mapping. The successive operations (or blocks) of this workflow are numbered 21 to 28. The operation 21 is a HDR (High Dynamic Range) acquisition, which delivers linear data 21o. The operation 22 is a PQ (Perceptual Quantiser) OETF (Opto-Electronic Transfer Function), which receives the linear data 21o and delivers non-linear data 22o. The operation 23 is a HEVC encoding, which receives the non-linear data 22o and delivers encoded non-linear data 23o. The operation 24 is a transmission, which receives the encoded non-linear data 23o and delivers encoded non-linear data 24o. The operation 25 is a HEVC decoding, which receives the encoded non-linear data 24o and delivers decoded non-linear data 25o. The operation 26 is a PQ (Perceptual Quantiser) EOTF (Electro-Optical Transfer Function), which receives the decoded non-linear data 25o and delivers linear data 26o. The operation 27 is a HDR to HDR tone mapping, which receives the linear data 26o and delivers displayable non-linear data 27o. The operation 28 is a HDR display, which receives the displayable non-linear data 27o in order to display them on a HDR display device. In this workflow, operations 25 to 28 are carried out on the consumer side. Here, we assume that the HDR signal acquired in operation 21 has a higher dynamic range than the HDR display device used in operation 28, which explains why the HDR to HDR tone mapping operation 27 is required.

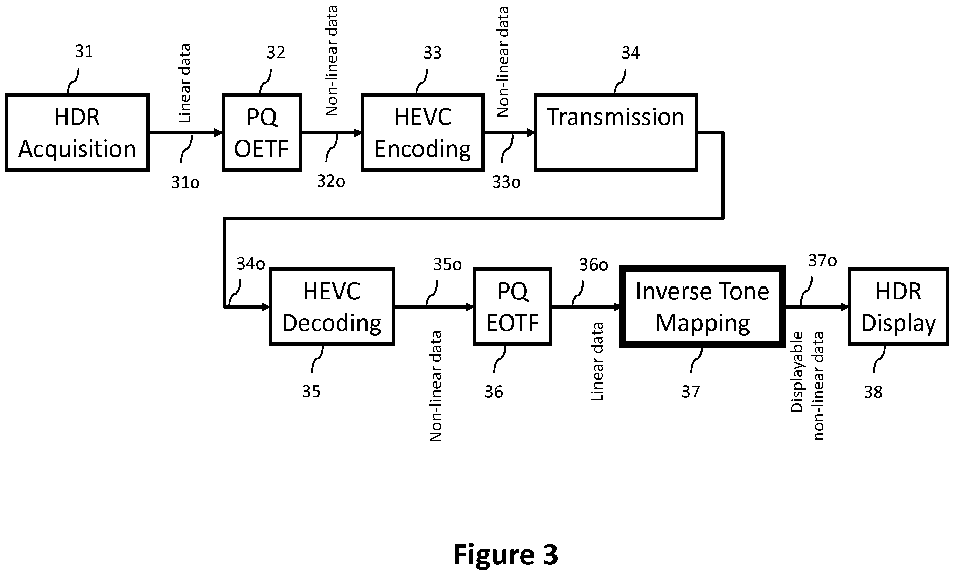

**Figure 3** illustrates a second example of HDR workflow according to the prior art, requiring a HDR to HDR inverse tone mapping. The successive operations (or blocks) of this workflow are numbered 31 to 38. The operation 31 is a HDR acquisition, which delivers linear data 31o. The operation 32 is a PQ OETF, which receives the linear data 31o and delivers non-linear data 32o. The operation 33 is a HEVC encoding, which receives the non-linear data 32o and delivers encoded non-linear data 33o. The operation 34 is a transmission, which receives the encoded non-linear data 33o and delivers encoded non-linear data 34o. The operation 35 is a HEVC decoding, which receives the encoded non-linear data 34o and delivers decoded non-linear data 35o. The operation 36 is a PQ EOTF, which receives the decoded non-linear data 35o and delivers linear data 36o. The operation 37 is a HDR to HDR inverse tone mapping, which receives the linear data 36o and delivers displayable non-linear data 37o. The operation 38 is a HDR display, which receives the displayable non-linear data 37o in order to display them on a HDR display device. In this workflow, operations 35 to 38 are carried out on the consumer side. Here, we assume that the HDR signal acquired in operation 31 has a lower dynamic range than the HDR display device used in operation 38, which explains why the HDR to HDR inverse tone mapping operation 37 is required.

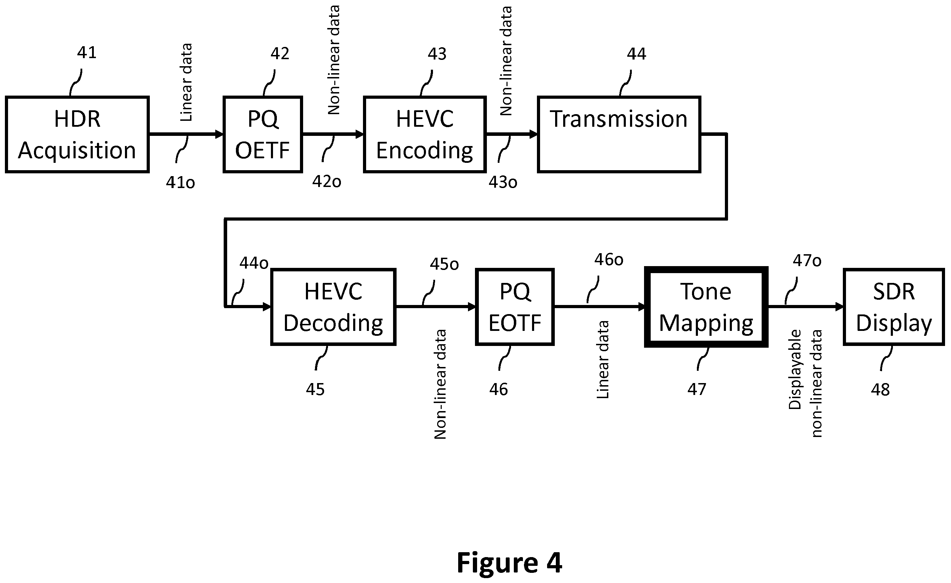

**Figure 4** illustrates a third example of HDR workflow according to the prior art, requiring a HDR to SDR tone mapping. The successive operations (or blocks) of this workflow are numbered 41 to 48. The operation 41 is a HDR acquisition, which delivers linear data 41o. The operation 42 is a PQ OETF, which receives the linear data 41o and delivers non-linear data 42o. The operation 43 is a HEVC encoding, which receives the non-linear data 42o and delivers encoded non-linear data 43o. The operation 44 is a transmission, which receives the encoded non-linear data 43o and delivers encoded non-linear data 44o. The operation 45 is a HEVC decoding, which receives the encoded non-linear data 44o and delivers decoded non-linear data 45o. The operation 46 is a PQ EOTF, which receives the decoded non-linear data 45o and delivers linear data 46o. The operation 47 is a HDR to SDR tone mapping, which receives the linear data 46o and delivers displayable non-linear data 47o. The operation 48 is a SDR display, which receives the displayable non-linear data 47o in order to display them on a SDR display device. In this workflow, operations 45 to 48 are carried out on the consumer side. Here, the HDR signal acquired in operation 41 has a higher dynamic range than the SDR display device used in operation 48, which explains why the HDR to SDR tone mapping operation 47 is required.

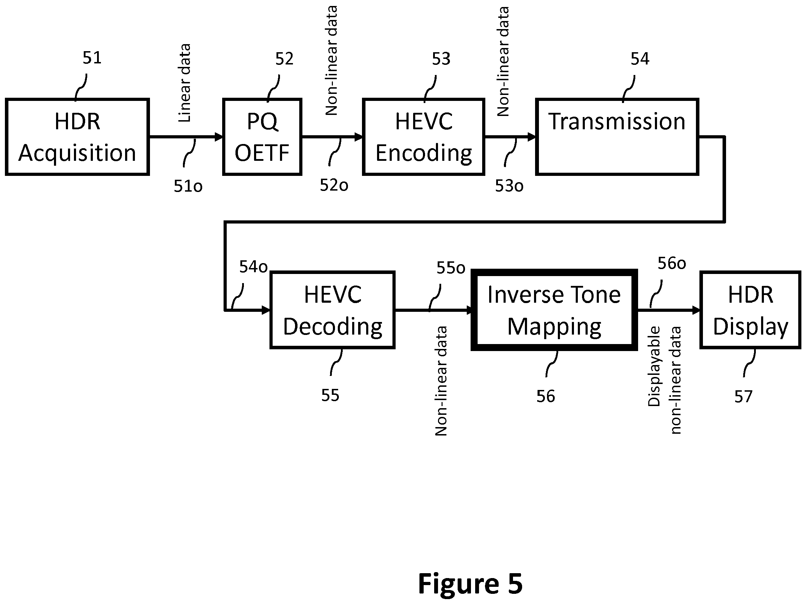

**Figure 5** illustrates a fourth example of HDR workflow according to the prior art, requiring a HDR to HDR inverse tone mapping. The successive operations (or blocks) of this workflow are numbered 51 to 57. The operation 51 is a HDR acquisition, which delivers linear data 51o. The operation 52 is a PQ OETF, which receives the linear data 51o and delivers non-linear data 52o. The operation 53 is a HEVC encoding, which receives the non-linear data 52o and delivers encoded non-linear data 53o. The operation 54 is a transmission, which receives the encoded non-linear data 53o and delivers encoded non-linear data 54o. The operation 55 is a HEVC decoding, which receives the encoded non-linear data 54o and delivers decoded non-linear data 55o. The operation 56 is a HDR to HDR inverse tone mapping, which receives the non-linear data 55o and delivers displayable non-linear data 56o. The operation 57 is a HDR display, which receives the displayable non-linear data 56o in order to display them on a HDR display device. In this workflow, operations 55 to 57 are carried out on the consumer side. Here, we assume that the HDR signal acquired in operation 51 has a lower dynamic range than the HDR display device used in operation 58, which explains why the HDR to HDR inverse tone mapping operation 56 is required. In this variant of figure 3, inverse tone mapping operation 56 is applied directly to non-linear PQ encoded data 55o (without a PQ EOTF operation), illustrating that in general, mappings or inverse tone mapping can also be applied to non-linear data.

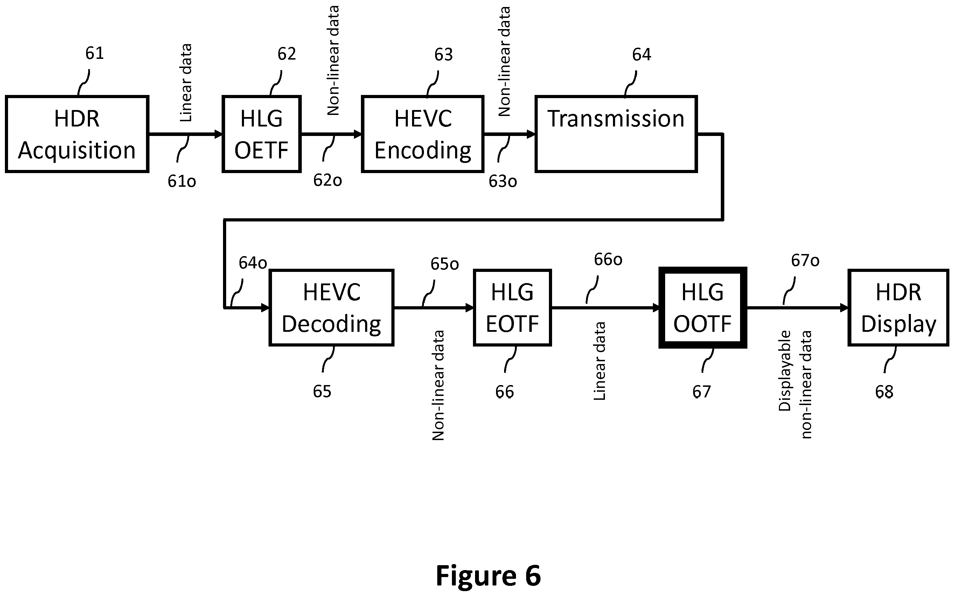

**Figure 6** illustrates a fifth example of HDR workflow according to the prior art, requiring a HLG OOTF mapping. The successive operations (or blocks) of this workflow are numbered 61 to 68. The operation 61 is a HDR acquisition, which delivers linear data 61o. The operation 62 is a HLG (Hybrid Log-Gamma) OETF, which receives the linear data 61o and delivers non-linear data 62o. The operation 63 is a HEVC encoding, which receives the non-linear data 62o and delivers encoded non-linear data 63o. The operation 64 is a transmission, which receives the encoded non-linear data 63o and delivers encoded non-linear data 64o. The operation 65 is a HEVC decoding, which receives the encoded non-linear data 64o and delivers decoded non-linear data 65o. The operation 66 is a HLG EOTF, which receives the decoded non-linear data 65o and delivers linear data 66o. The operation 67 is a HLG (Hybrid Log-Gamma) OOTF (Optico-Optical Transfer Function), which receives the linear data 66o and delivers displayable non-linear data 67o. The operation 68 is a HDR display, which receives the displayable non-linear data 67o in order to display them on a HDR display device. In this workflow, operations 65 to 68 are carried out on the consumer side. Here, HLG OOTF operation 67 can be seen as a form of tone mapping or inverse tone mapping, dependent on parameter settings).

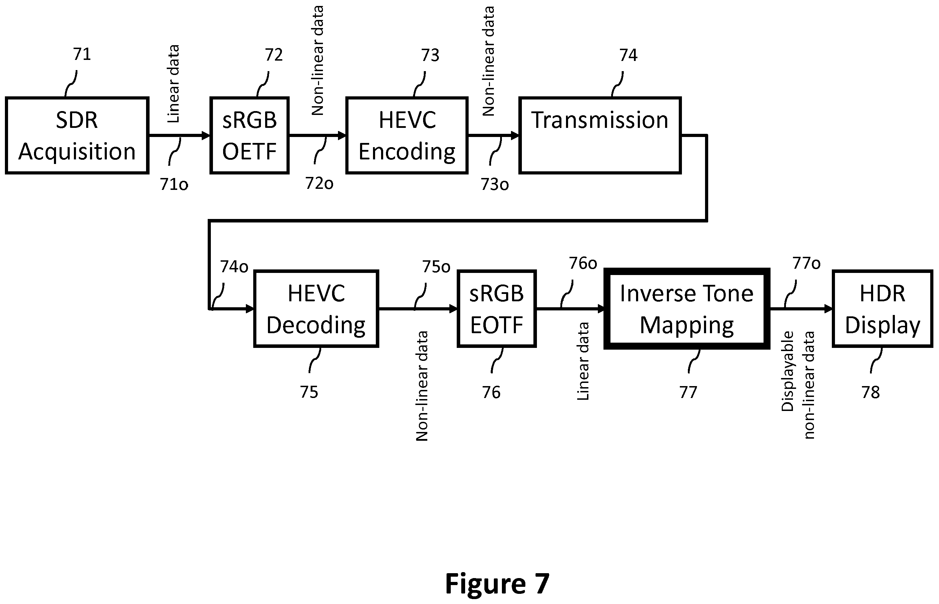

**Figure 7** illustrates a second example of SDR workflow according to the prior art, requiring a SDR to HDR inverse tone mapping. The successive operations (or blocks) of this workflow are numbered 71 to 78. The operation 71 is a SDR acquisition, which delivers linear data 71o. The operation 72 is a sRGB OETF, which receives the linear data 71o and delivers non-linear data 72o. The operation 73 is a HEVC encoding, which receives the non-linear data 72o and delivers encoded non-linear data 73o. The operation 74 is a transmission, which receives the encoded non-linear data 73o and delivers encoded non-linear data 74o. The operation 75 is a HEVC decoding, which receives the encoded non-linear data 74o and delivers decoded non-linear data 75o. The operation 76 is a sRGB EOTF, which receives the decoded non-linear data 75o and delivers linear data 76o. The operation 77 is a SDR to HDR inverse tone mapping, which receives the linear data 76o and delivers displayable non-linear data 77o. The operation 78 is a HDR display, which receives the displayable non-linear data 77o in order to display them on a HDR display device. In this workflow, operations 75 to 78 are carried out on the consumer side. Here, the SDR signal acquired in operation 71 has a lower dynamic range than the HDR display device used in operation 78, which explains why the SDR to HDR inverse tone mapping operation 77 is required.

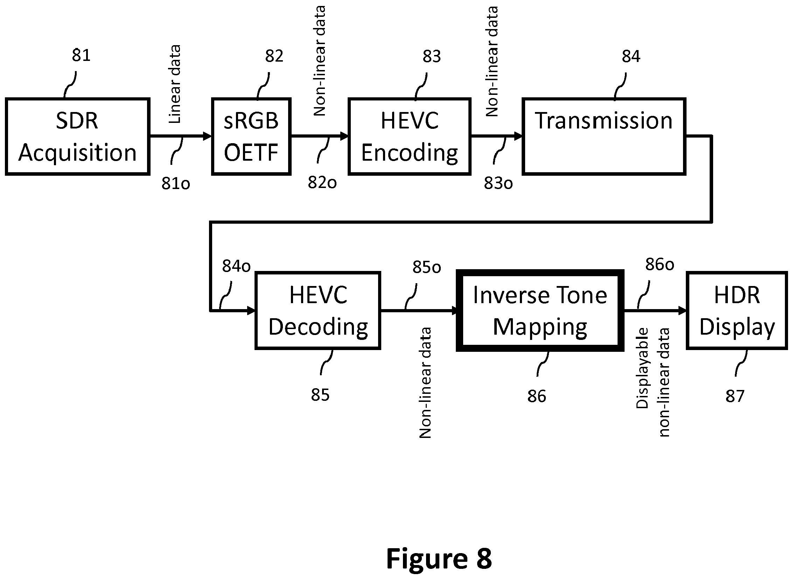

**Figure 8** illustrates a third example of SDR workflow according to the prior art, requiring a SDR to HDR inverse tone mapping. The successive operations (or blocks) of this workflow are numbered 81 to 87. The operation 81 is a SDR acquisition, which delivers linear data 81o. The operation 82 is a sRGB OETF, which receives the linear data 81o and delivers non-linear data 82o. The operation 83 is a HEVC encoding, which receives the non-linear data 82o and delivers encoded non-linear data 83o. The operation 84 is a transmission, which receives the encoded non-linear data 83o and delivers encoded non-linear data 84o. The operation 85 is a HEVC decoding, which receives the encoded non-linear data 84o and delivers decoded non-linear data 85o. The operation 86 is a SDR to HDR inverse tone mapping, which receives the linear data 85o and delivers displayable non-linear data 86o. The operation 87 is a HDR display, which receives the displayable non-linear data 86o in order to display them on a HDR display device. In this workflow, operations 85 to 87 are carried out on the consumer side. Here, the SDR signal acquired in operation 81 has a lower dynamic range than the HDR display device used in operation 878, which explains why the SDR to HDR inverse tone mapping operation 86 is required. In this variant of figure 7, inverse tone mapping operation 86 is applied directly to non-linear data 85o (without a sRGB EOTF operation), illustrating that in general, mappings or inverse tone mapping can also be applied to non-linear data.

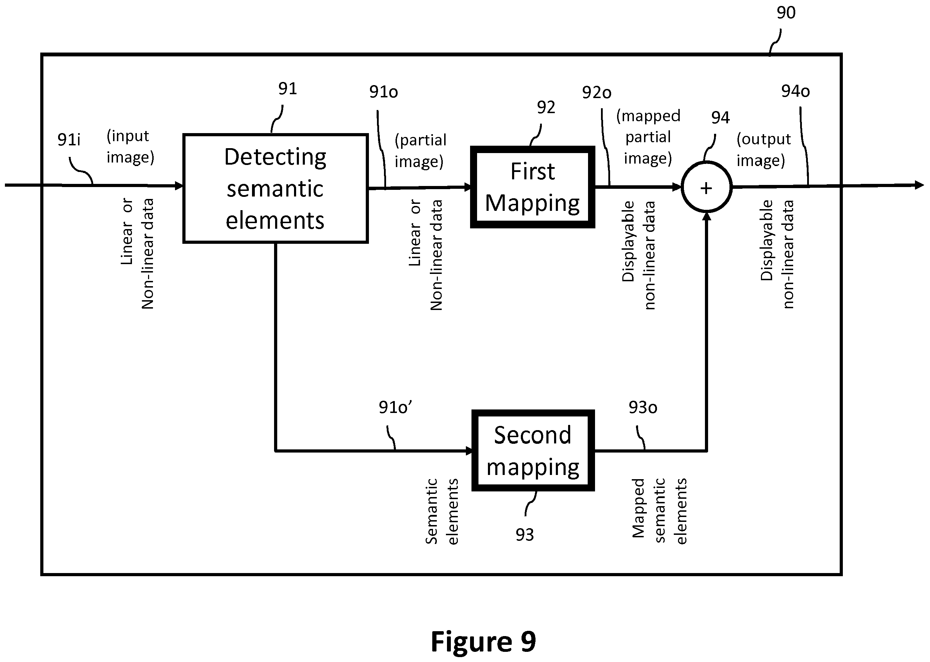

### 5.2 First embodiment of the invention (figures 9, 11 and 12)

As illustrated in **figure 9****,** the general principle of the first embodiment of the invention is to replace a classical mapping or inverse mapping operation by an extended processing (referenced 90) to enable an improved mapping of semantic elements, i.e. semantically identifiable elements comprised in an input image 91i (comprising itself linear or non-linear data).

The replaced classical mapping or inverse mapping operation is for example:
- the HDR to HDR tone mapping operation 27 of figure 2;
- the HDR to HDR inverse tone mapping operation 37 of figure 3;
- the HDR to SDR tone mapping operation 47 of figure 4;
- the HDR to HDR inverse tone mapping operation 56 of figure 5;
- the HLG OOTF operation 67 of figure 6;
- the SDR to HDR inverse tone mapping operation 77 of figure 7;
- the SDR to HDR inverse tone mapping operation 86 of figure 8;
- etc.

The replaced classical mapping or inverse mapping operation is not limited to classical tone mapping or classical inverse tone mapping. For example, it can also be a classical gamut mapping, a classical inverse gamut mapping operators, etc.

The semantic elements are for example (non-exhaustive list): texts, logos, graphical elements, thumbnail elements, skin tones, etc. (i.e. any other objects of interest comprised in the output image to be displayed).

The first embodiment applies for example with semantic elements such as text elements that are baked into a video (these text elements including title sequences, end credits, as well as any text that appears as part of a show). It equally applies to logos and/or other graphical elements, which may be detected separately. For example, a TV channel logo may be baked into content redistributed then on another network. In all these cases, such text and logos are detected and a spatial mask is for example derived, describing their localization, shape and size.

The first embodiment also applies for example with content selection/navigation screens, whereby semantic elements such as menu, graphics and text elements may be treated separately. Consider for example an image which is a navigation screen displayed in standard dynamic range. This image contains various text elements, some of which are part of movie thumbnails, and other graphical elements are determined by the webserver that is hosting the webpage (which may equally have been an app running inside a digital television). With a classical solution, an HDR display device may carry out an inverse tone mapping of the navigation screen to match its peak luminance, thereby maximally leveraging its capabilities. Tone curves that achieve such an inverse tone mapping would yield very high-quality images and video, but the menu, text and thumbnail elements may be mapped to levels that are either too light or too dark in relation to the images and video, as well as in relation to the viewing environment. With the first embodiment of the invention, the menu, text, thumbnails and logos (i.e. the semantic elements) are mapped separately to maintain a screen that is easy to read, comfortable to view, and pleasant to watch. Additionally, the explicit management of levels for these text elements may allow to achieve technical effects such as alignment of levels of logos to requirements of logo owners, reduction of energy consumption by limiting levels of text elements and reduced bandwidths for image transmission thanks to text levels adapted to image content. It is noted that in the aforesaid example, there can be both internally generated text and text that is baked into the thumbnails. With the proposed solution, these two types of text may be mapped to the same reference level, or different reference levels may be specified.

In the first embodiment of the invention, the extended processing 90 comprises four operations numbered 91 to 94.

The operation 91 is a detection operation enabling to detect the semantic elements comprised in the input image 91i, and providing separately, on the one hand the detected semantic elements 91o', and on the other hand a partial image 91o (comprising liner or non-linear data and obtained by removing, from the input image 91i, the regions corresponding to the detected semantic elements).

The operation 92 is a first mapping operation, which receives the partial image 91o and delivers a mapped partial image 92o (displayable non-linear data). This first mapping operation 92 corresponds for example to one of the following classical mapping or inverse mapping operations (except that it applies to the partial image 91o instead of a complete input image): operation 27 of figure 2, operation 37 of figure 3, operation 47 of figure 4, operation 56 of figure 5, operation 67 of figure 6, operation 77 of figure 7 and operation 86 of figure 8. However, it is not limited to classical tone mappings or classical inverse tone mappings and it can also be a classical gamut mapping, a classical inverse gamut mapping operators, etc.

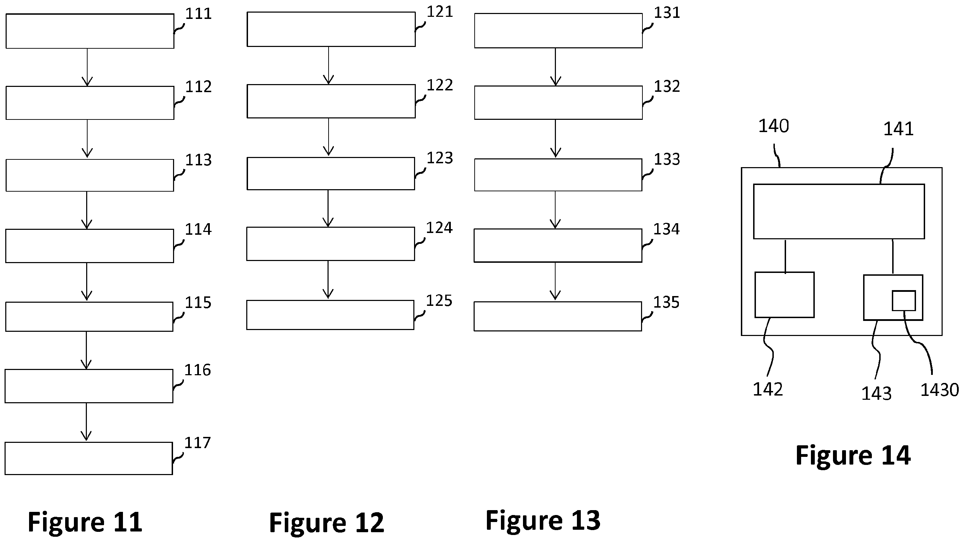

The operation 93 is a second mapping operation, which receives the detected semantic elements 91o' and delivers mapped semantic elements 93o. The second mapping operation 93 is different from the first mapping operation 92. Several implementations of the second mapping operation 93 are described below, in relation to figure 12.

The operation 94 is a combining operation, which receives the mapped partial image 92o and the mapped semantic elements 93o, and combine them into an output image 94o (comprising displayable non-linear data, including the mapped semantic elements 93o). The output image 94o can be stored temporarily or provided immediately to a display device (e.g. the one referenced 28 in figure 2, 38 in figure 3, 48 in figure 4, 57 in figure 5, 68 in figure 6, 78 in figure 7 or 87 in figure 8).

**Figure 11** is a flowchart of a method according to the aforesaid first embodiment of the invention. The method is carried out by a production device (see for example the description of figure 14).

In step 111, the production device obtains the input image 91i (comprising linear or non-linear input data).

In step 112, the production device detects at least one semantic element 91o' comprised in the input image.

For example, text detection and logo detection in step 112 may follow standard techniques in optical character recognition (OCR). Assuming that a standard technique for text detection has taken place, the output of text detection may be the semantic text itself, as well as information describing its appearance, localization and shape. This information would be sufficient to describe and reconstruct the text in its original form, shape and appearance. In one example, the output of text detection may be represented in the METS/ALTO format, which is a standardized XML-based format to store text as well as layout information. This means that after text recognition, the ALTO description may be used to reconstruct the detected text. This is possible because the layout is represented as a combination of font, font size, positional information as well as the text string itself.

Once the text is detected, and the text is found to require placement at pre-determined reference levels, then the pixels overlapping with the text may be annotated in a mask. The mask may in turn be used to determine which pixels should be tone mapped (or inverse tone mapped, e.g. in the case of SDR to HDR mapping), and which pixels should be mapped to pre-determined reference levels. Continuing the same example, the METS/ALTO description may be used to reconstruct the obtained text and metadata into an image. The resulting image may then be used as a mask. Further, the edges of each character may be determined by applying a suitably chosen edge detector to the mask image. The corresponding pixel locations in the input image may then be analyzed to determine locally how sharp the text is. Sharpness detection may in one example be implemented by measuring for each pixel indicated by the edge-detected mask, the rise distance, which is the distance to go from, for instance, 10% to 90% of the final value on each side of the edge. Local Fourier-based methods may also be appropriate to assess local text sharpness. To assess angle or slant of a text string, the METS/ALTO metadata may be consulted directly. In turn, such assessment may determine whether the detected text is suitable for separate mapping, or whether the text should be tone mapped in the same way as the remainder of the content (see step 113). It should be noted that the METS/ALTO example is intended to describe one possible embodiment, without being limiting in scope.

In step 113, the production device analyzes each detected semantic element and decides whether the detected semantic element is kept as a semantic element to which is applied the second mapping operator (see step 116) or is kept in the partial image (see step 114) to which is applied the first mapping operator (see step 115).

In other words, in step 113, a s subsequent analysis of the text (i.e. semantic element) may follow to determine if the text should be mapped separately or not. Example reasons for excluding detected text from separate mapping may include:
- The text is part of the scene, for instance text printed on the side of a truck or on a façade. Simple analysis such as the angle/skew at which text appears may help determine whether the text was super-imposed in post-production or belonged to the scene. Color analysis may also help differentiate between the two.
- The text has strongly anti-aliased edges making separation from the background difficult.

In step 114, the production device obtains a partial image 91o by removing, from the input image 91i, at least one image region corresponding to the at least one semantic element.

In step 115, the production device applies a first mapping operator to the partial image 91o, and delivers the mapped partial image 92o.

In step 116, the production device applies the second mapping operator to the at least one semantic element 91o', and delivers the mapped semantic element(s) 93o.

In step 117, the production device combines the results of steps 92 (applying the first mapping operator) and 93 (applying the second mapping operator), to produce the output image 94o.

Thus, the at least one semantic element can be mapped from one luminance level to another (second mapping), independently of the mapping of the remainder of the input image (first mapping), so that production guidelines relating to text (or other semantic element) levels can be adhered to in the face of tone mapping and/or inverse tone mapping. Same reasoning applies to other types of mapping (gamut mapping, inverse gamut mapping operators, etc.).

**Figure 12** is a flowchart detailing an embodiment of step 116 shown in figure 112, i.e. the step of applying the second mapping operator.

In step 121, for at least one given semantic element, the production device selects a reference level (luma level) among a plurality of different pre-defined reference levels, as a function of:
- a type of the given semantic element; and/or
- metadata associated with the given semantic element and supplied along with the input image (such a case allows for example a director of photography to maintain some control over how a movie is reproduced on displays of varying dynamic range: in post-production a mapping table may be constructed that lists desired text reference levels, for example as function of peak display luminance; a display device which receives such a table as metadata may then select a text reference level appropriate for its peak display luminance); and/or
- metadata associated with the given semantic element and retrieved from a server (for example, a display manufacturer may maintain a server that may be consulted periodically by a display device, enabling it to determine appropriate reference levels; this would essentially allow a manufacturer to upgrade semi-fixed display parameters (such as text reference levels) whenever this is deemed necessary, without the need for updating the firmware of each individual display).

Such a plurality of different pre-defined reference levels may be taken from published reference levels (the ITU has published such reference levels in ITU-R Report BT.2408). In this case, a display device may store one or more pre-defined reference levels. Multiple text reference levels may be required in case different types of text are to be distinguished (for example subtitles and baked-in text).

In step 122, for at least one given semantic element, the production device alters the reference level obtained in step 121, as a function of illumination conditions of a viewing environment. For example, a display device may use a sensor to determine the illumination conditions of the viewing environment. The default text reference levels, as determined in the examples above, may then be altered dependent on the overall illumination level of the viewing environment. For example, in light viewing environments, the text reference levels may be mapped to higher values to maintain appropriate readability, whereas in darker viewing environments text may be mapped to lower values, ensuring both readability and viewing comfort.

In step 123, for at least one given semantic element, the production device adjusts the reference level according to user preference information. For example, an HDR television may include a user control to explicitly set text elements to higher or lower values. This may take the form of the user selecting a multiplication factor, for example in the range [0.5,2]. By multiplying the determined text reference level with such a multiplication factor, the user may affect the level at which text is reproduced, thus maintaining appropriate control over the final appearance of the content.

In step 124, the production device alters the reference level resulting from steps 121 to 123, as a function of at least one display characteristic of the display device (the production device also taking into account this at least one display characteristic when applying the first mapping operator). For example, the production device obtains the at least one display characteristic through a HDMI link between the production device and the display device.

In step 125, for at least one given semantic element, the production device sets pixels of the at least one semantic element to the reference level resulting from steps 121 to 124.

In alternative embodiments of the flowchart of figure 12, one or several of steps 122 to 124 is (are) omitted.

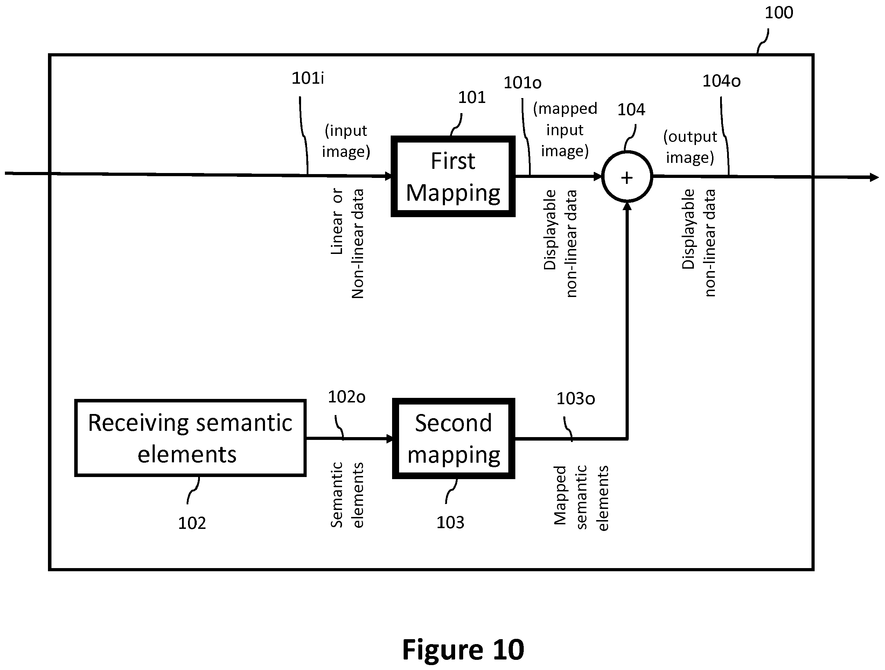

### 5.3 Second embodiment of the invention (figures 10 and 13)

As illustrated in **figure 10****,** the second embodiment of the invention differs from the first embodiment of figure 9 in that the operation 91 for detecting the semantic elements is replaced by an operation 102 for receiving such semantic elements.

The second embodiment applies for example with text (i.e. semantic element) that is inserted by the display itself, such as subtitles and on-screen displays (OSDs).

More precisely, in the second embodiment of the invention, the extended processing 100 comprises four operations numbered 101 to 104.

The operation 101 is a first mapping operation, similar to the operation 92 of figure 9 except that it applies to the input image 101i instead of the partial image 91o. It delivers a mapped input image 101o (displayable non-linear data).

The operation 102 is a reception operation enabling to receive, e.g. in the form of metadata, at least one semantic element (see description above) external to, and to be associated with, the input image 101i. It delivers the at least one received semantic element 102o.

The operation 103 is similar to operation 93 of figure 9. It receives the semantic elements 102o and delivers mapped semantic elements 103o.

The operation 104 is similar to operation 94 of figure 9. It receives the mapped input image 101o and the mapped semantic elements 103o, and combine them into an output image 104o.

**Figure 13** is a flowchart of a method according to the aforesaid second embodiment of the invention. The method is carried out by a production device (see for example the description of figure 14).

Step 131 is similar to step 111 of figure 11. The production device obtains the input image 101i.

In step 132, the production device receives the at least one semantic element 102o (external to, and to be associated with, the input image 101i).

Step 133 is similar to step 115 of figure 11, but the input is not the same. The production device applies the first mapping operator to the input image 101i, and delivers the mapped input image 101o.

Step 134 is similar to step 116 of figure 11. The production device applies the second mapping operator to the at least one semantic element 102o, and delivers the mapped semantic element(s) 103o.

Step 135 is similar to step 117 of figure 11. The production device combines the results of steps 133 (applying the first mapping operator) and 134 (applying the second mapping operator), to produce the output image 104o.

### 5.4 Production device according to an embodiment of the invention (figure 14)

**Figure 14** shows the simplified structure of a production device 140 according to an embodiment of the invention. In a particular embodiment, the production device 140 is comprised in the display device which displays the output image (comprising the displayable non-linear data, including the mapped semantic elements), e.g. a TV, a computer, a smartphone, a tablet, a video camera, etc. In an alternative embodiment, the production device 140 is comprised in an ancillary device connected to the display device, e.g. a set-top-box, a BlueRay player, a game console, etc.

The production device 140 comprises a non-volatile memory 143 (e.g. a read-only memory (ROM) or a hard disk), a volatile memory 142 (e.g. a random access memory or RAM) and a processor (computation machine) 141. The non-volatile memory 143 is a non-transitory computer-readable carrier medium. It stores executable program code instructions 1430, which are executed by the processor 141 in order to enable implementation of the method described below, in any of its embodiments (see figures11, 12 and 13). Upon initialization, the program code instructions 1430 are transferred from the non-volatile memory 143 to the volatile memory 142 so as to be executed by the processor 141. The volatile memory 142 likewise includes registers for storing the variables and parameters required for this execution.

All the steps of the method described below (see figure 1) can be implemented by the device 10, equally well:
- by the execution of a set of program code instructions executed by a reprogrammable computing machine such as a PC type apparatus, a DSP (digital signal processor) or a microcontroller. This set of program code instructions can be stored in a non-transitory computer-readable carrier medium that is detachable (for example a floppy disk, a CD-ROM or a DVD-ROM) or non-detachable; or
- by a dedicated computing machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it can also be implemented in hardware form, or any form combining a hardware portion and a software portion.

## Claims

1. **A production method** for producing an output image (94o, 104o) comprising displayable non-linear output data, said method comprising:
- obtaining (111, 131) an input image comprising linear or non-linear input data;
- obtaining (112, 132) at least one semantic element comprised in said input image or external to, and to be associated with, said input image;
- if said at least one semantic element is comprised in said input image, obtaining (114) a partial image by removing, from said input image, at least one image region corresponding to said at least one semantic element;
- applying (115, 133) a first mapping operator to said input image, if said at least one semantic element is external to said input image, or to said partial image, if said at least one semantic element is comprised in said input image;
- applying (116, 134) a second mapping operator to said at least one semantic element, said second mapping operator being different from said first mapping operator; and
- combining (117, 135) the results of applying a first mapping operator and applying a second mapping operator, to produce said output image.

2. **A production device** (140) for producing an output image (94o, 104o) comprising displayable non-linear output data, said device comprising a reprogrammable or dedicated computation machine (141) configured for:
- obtaining an input image comprising linear or non-linear input data;
- obtaining at least one semantic element comprised in said input image or external to, and to be associated with, said input image;
- if said at least one semantic element is comprised in said input image, obtaining a partial image by removing, from said input image, at least one image region corresponding to said at least one semantic element;
- applying a first mapping operator to said input image, if said at least one semantic element is external to said input image, or to said partial image, if said at least one semantic element is comprised in said input image;
- applying a second mapping operator to said at least one semantic element, said second mapping operator being different from said first mapping operator; and
- combining the results of applying a first mapping operator and applying a second mapping operator, to produce said output image.

3. The production method according to claim 1 or the production device according to claim 2, wherein said at least one semantic element belongs to the group comprising:
• texts;
• logos;
• graphical elements;
• thumbnail elements;
• skin tones; and
• any other objects of interest comprised in said output image.

4. The production method according to any one of claims 1 and 3 or the production device according to any one of claims 2 and 3, wherein said first mapping operator belongs to the group comprising:
• tone mapping operators, including HDR to HDR tone mapping operators and HDR to SDR tone mapping operators;
• inverse tone mapping operators, including HDR to HDR inverse tone mapping operators and SDR to HDR inverse tone mapping operators;
• gamut mapping operators;
• inverse gamut mapping operators; and
• Hybrid Log-Gamma Optico-Optical Transfer functions.

5. The production method according to any one of claims 1 and 3 to 4 or the production device according to any one of claims 2 to 4, wherein said obtaining at least one semantic element comprises detecting (112) at least one semantic element in said input image.

6. The production method according to claim 5 or the production device according to claim 5, wherein said obtaining at least one semantic element further comprises analyzing (113) each detected semantic element and deciding (113) whether said detected semantic element is kept as a semantic element to which is applied said second mapping operator or is kept in said partial image to which is applied said first mapping operator.

7. The production method according to any one of claims 1 and 3 to 4 or the production device according to any one of claims 2 to 4, wherein said obtaining at least one semantic element comprises receiving (132) metadata comprising said at least one semantic element.

8. The production method according to any one of claims 1 and 3 to 7 or the production device according to any one of claims 2 to 7, wherein said applying a second mapping operator comprises setting (125) pixels of said at least one semantic element to a reference level.

9. The production method according to claim 8 or the production device according to claim 8, wherein said applying a second mapping operator further comprises, for at least one given semantic element, selecting (121) said reference level among a plurality of different pre-defined reference levels, as a function of a type of said given semantic element.

10. The production method according to claim 8 or the production device according to claim 8, wherein said applying a second mapping operator further comprises, for at least one given semantic element, selecting (121) said reference level among a plurality of different pre-defined reference levels, as a function of metadata associated with said given semantic element and supplied along with said input image.

11. The production method according to claim 8 or the production device according to claim 8, wherein said applying a second mapping operator further comprises, for at least one given semantic element, selecting (121) said reference level among a plurality of different pre-defined reference levels, as a function of metadata associated with said given semantic element and retrieved from a server.

12. The production method according to any one of claims 8 to 11 or the production device according to any one of claims 8 to 11, wherein said applying a second mapping operator further comprises, for at least one given semantic element, altering (122) said reference level as a function of illumination conditions of a viewing environment.

13. The production method according to any one of claims 8 to 12 or the production device according to any one of claims 8 to 12, wherein said applying a second mapping operator further comprises, for at least one given semantic element, adjusting (123) said reference level according to user preference information.

14. The production method according to any one of claims 8 to 13 or the production device according to any one of claims 8 to 13, wherein said applying a first mapping operator comprises taking into account at least one display characteristic of a display device, and wherein said applying a second further comprises, for at least one given semantic element, altering (124) said reference level as a function of said at least one display characteristic.

15. A computer program product (1430) comprising program code instructions for implementing the production method according to any one of the claims 1 and 3 to 14, when said program is executed on a computer or a processor (141).
